# FASCICULE DE BREVET EUROPEEN

(11) **EP 0 377 363 B1**
(45) Date de publication et mention de la délivrance du brevet: **15.09.1993**
(21) Numéro de dépôt: 89403453.7
(22) Date de dépôt: 13.12.1989
(51) Int. Cl.: C08G 18/69, C08G 18/72, C09J 175/04

(54) **Composition adhésive polyuréthanne**
Polyurethan-Klebstoffzusammensetzung
Polyurethane adhesive composition

(30) Priorité: 28.12.1988 FR 8817295
(43) Date de publication de la demande: 11.07.1990
(73) Titulaire: SOCIETE NATIONALE DES POUDRES ET EXPLOSIFS, F-75181 Paris Cédex 04 (FR)
(72) Inventeur: Tauzia, Jean-Michel, F-33290 Blanquefort (FR); Trichard, Jean-Louis, F-33160 St Medard en Jalles (FR); Hivert, Didier, F-33610 Cestas (FR)
(74) Mandataire: Pech, Bernard

(56) Documents cités:
- US-A- 4 008 197

## Description

L'invention se rapporte à une composition adhésive thermoplastique réticulable pouvant être utilisée dans de multiples domaines tels que l'autopropulsion.

Le caractère thermoplastique, qui correspond à l'appellation anglo-saxonne "hot-melt", d'une composition adhésive sous-entend que lorsque les éléments d'une telle composition sont mélangés et portés à une température plus ou moins élevée, ils réagissent ensemble et avec le support sur lesquelles ils sont déposés mais aussi que cette composition est sèche lorsque la température de l'adhésif est ramenée à la température ambiante. Ce comportement est nécessaire pour toutes les utilisations dans lesquelles les salissures provoquées par l'adhésif lui-même au cours de son étalement sont prohibées.

Le caractère réticulable, c'est-à-dire thermodurcissable de l'adhésif, est nécessaire afin que les performances des collages ne soient pas dégradées lorsque les pièces collées sont portées à haute température.

Or il existe un grand nombre d'applications pour lesquelles le cumul de ces deux caractères est nécessaire. Par exemple dans le domaine de l'autopropulsion, le collage des calottes avant de matériau inhibiteur à l'intérieur des corps de propulseur nécessite d'introduire ces calottes préenduites de colle dans le corps sans laisser de bavure le long de la paroi interne du propulseur et donc sous-entend l'utilisation d'une colle thermoplastique mais interdit aussi un retour à l'état liquide de cette colle lors de l'augmentation de la température provoquée par le fonctionnement du propulseur.
Les produits appartenant à l'état de la technique présentent de nombreux inconvénients.
Les adhésifs de type "hot-melt" à base de polyéthylène, de polypropylène, de copolymère acétate de vinyl-éthylène ne conviennent pas car ils perdent leurs propriétés mécaniques dès que la température s'élève. Les films adhésifs structuraux époxydes qui répondent bien aux deux critères ("hot-melt" et reticulables) présentent deux inconvénients majeurs : leur température de réactivation est généralement supérieure à 100°C ce qui les rend incompatibles pour des collages entre des matériaux composites classiques, et de plus ce type d'adhésif conduit généralement à des valeurs de collage faibles en pelage avec les élastomères.
Par ailleurs, il existe des adhésifs polyuréthannes dont la mise en oeuvre s'opère par fusion (caractère "hot-melt") et dont le durcissement (caractère réticulable) s'opère par réaction du produit avec l'humidité de l'air. La présence d'humidité nécessaire à la réticulation du produit est incompatible avec de nombreuses utilisations dans lesquelles l'humidité est prohibée afin d'éviter des problèmes, notamment de corrosion.

Un autre inconvénient majeur posé par les compositions adhésives existant sur le marché réside dans le fait qu'une fois la réticulation commencée il n'est plus possible de la stopper. Or un souhait de nombreux industriels serait de pouvoir stocker les pièces à coller de préférence à température ambiante préenduites de la composition adhésive et de rendre effectif le collage sur le substrat uniquement au moment requis. Ceci leur permettant une plus grande souplesse dans la mise en oeuvre des procédés de fabrication.
De plus, de nombreuses applications requièrent l'utilisation de compositions adhésives présentant les caractères "hot-melt" et réticulable en atmosphère sèche.

Pour répondre à ces différents problèmes techniques l'invention propose une composition adhésive thermoplastique réticulable à base de polybutadiène hydroxytéléchélique, d'un mélange de composés diisocyanates et d'un catalyseur, caractérisée en ce que d'une part elle contient pour 100 parties de polybutadiène hydroxytéléchélique, une quantité de tolylène diisocyanate, et une quantité de 3-isocyanatométhyl-3,5,5-triméthylcyclohexylisocyanate plus communément désigné sous le nom d'isophorone diisocyanate telles que le rapport entre le nombre total de fonctions isocyanates de la composition et le nombre total de fonctions hydroxyles de la composition soit compris entre 0,90 et 1,30 et en ce que d'autre part le rapport du nombre des fonctions isocyanates apportées par le tolylène diisocyantate et du nombre de fonctions isocyanates apportées par l'isophorone diisocyanate est compris entre 0,1 et 2 et en ce que le catalyseur utilisé est choisi dans le groupe constitué par les sels organiques de plomb ou d'étain et les amines tertiaires et entre dans la composition du mélange à raison de 0,1 à 1 % dans le cas d'une amine tertiaire et à raison de 0,01 à 0,1 % dans le cas d'un sel organique de plomb ou d'étain.

D'une façon préférentielle le rapport entre le nombre total de fonctions isocyanates de la composition et le nombre total de fonctions hydroxyles de la composition est compris entre 1,05 et 1,15, le rapport du nombre des fonctions isocyanates apportées par le tolylène diisocyanate et du nombre de fonctions isocyanates apportées par l'isophorone diisocyanate est compris entre 0,3 et 0,8 et préférentiellement environ égal à 0,5 et le catalyseur utilisé est choisi dans le groupe consitué par les amines tertiaires et les sels organiques de plomb ou d'étain et entre dans la composition du mélange à raison de 0,1 à 0,4 % dans le cas d'une amine tertiaire et à raison de 0,01 à 0,03 % dans le cas d'un sel organique de plomb ou d'étain.
Parmi les amines tertiaires et les sels organiques de plomb ou d'étain pouvant être utilisés en tant que catalyseur, une solution préférentielle consiste à utiliser l'octoate de plomb ou la triéthylamine.

Les charges pouvant entrer dans la composition adhésive selon l'invention sont diverses et variées et dépendent de l'utilisation qui sera faite de cette composition adhésive. Il peut par exemple s'agir d'agents thixotropes tels que la silice, le noir de carbone pulvérulent, les fibres d'aramide, les fibres de carbone coupées ou l'amiante, d'agents déshydratants tels que la Baylith L® fabriquée par la société Bayer ou tout autre zéolithe adaptée pour piéger les molécules d'eau, d'agents conducteurs de l'électricité statique tels que le noir de carbone, de colorants, d'agents antioxydants tels que le ditertiobutylparacrésol si l'on veut conserver la composition pendant un temps assez long avant l'utilisation. Les compositions adhésives pourront également contenir un agent dopant d'adhésion tel que l'époxyde de glycérol. Un ralentisseur de réaction tel que le chlorure de benzoyle pourra également être utilisé afin d'empêcher les réactions secondaires indésirées tels que la polymérisation des groupements isocyanates ou leur réticulation par formation d'allophanates. La composition pourra également contenir une agent extenseur de chaîne préférablement choisi dans le groupe comprenant le triméthylhexanediol, le dipropylène glycol, le triméthylpentanediol, le butanediol.
Les catalyseurs utilisés ont été sélectionnés parmi tous les catalyseurs utilisés dans la chimie des polyuréthannes. Leur rôle étant d'accélérer la réaction de réticulation sans participer à cette réticulation, leur quantité sera précisément déterminée en fonction de la "vie de pot", c'est-à-dire du temps nécessaire à la réticulation à partir du moment ou le prépolymère est mis en contact avec le réticulant. A quantité pondérale égale les amines tertiaires sont des catalyseurs plus lents que les sels organiques de métaux. Les compositions adhésives selon l'invention permettent d'obtenir des vies de pot comprises entre 1 heure et 3 heures pour les catalyseurs métalliques et des vies de pot supérieures à trois heures pour les catalyseurs aminés.

Il apparait donc clairement que la nature des charges utilisées ainsi que la quantité de catalyseur seront précisément déterminées par l'homme du métier en fonction de ses besoins.

Les compositions adhésives préférentielles selon l'invention permettent d'obtenir des compositions adhésives présentant une bonne thixotropie, une longue vie de pot, un caractère électroconducteur, et comprennent, pour 100 parties de polybutadiène hydroxytéléchélique, entre 7 et 10 parties de triméthylhexanediol, entre 3 et 4 parties d'époxyde de glycérol, 0,3 à 1 partie de ditertiobutylparacrésol, 6 à 10 parties de tolylène diisocyanate, 18 à 22 parties d'isophorone diisocyanate, de 5 à 10 parties de noir de carbone, 3 à 10 parties de silice, et 0,01 à 0,03 partie de chlorure de benzoyle et en tant que catalyseur soit 0,2 à 0,3 partie de triéthylamine, soit 0,01 à 0,02 partie d'octoate de plomb.

Les compositions adhésives selon l'invention, outre le fait qu'elles cumulent les deux propriétés thermoplastique et réticulable, présentent l'avantage de pouvoir réticuler en deux temps. Elles présentent également la particularité de pouvoir être utilisées en absence d'humidité dans l'air. Elles peuvent être employées sur de nombreux substrats tels que par exemple les élastomères, les matériaux composites, les surfaces métalliques revêtues d'un primaire ou d'une peinture.

Un autre avantage présenté par les compositions adhésives selon l'invention réside dans le fait qu'elles sont parfaitement compatibles avec les huiles hydrocarbonées et saturées telles que les huiles de lubrification. Ceci se traduit essentiellement par un collage peu ou pas affecté par une pollution de l'interface par ces huiles. Cet aspect présente un grand interêt, par exemple pour une utilisation sur les chaînes de montage de l'industrie automobile puisque ces compositions adhésives sont compatibles avec le concept du "collage sur tôles grasses".

Les compositions adhésives peuvent se présenter notamment sous forme correspondante à l'appellation anglo-saxonne "one shot", ou sous forme bicomposante. Dans la forme "one shot" on dispose d'une part d'un prémélange non catalysé contenant un oligomère et d'autre part d'un réticulant associé au catalyseur. Au moment de l'utilisation de la colle la partie contenant le réticulant associé au catalyseur ne représente qu'une faible quantité en poids par rapport au prémélange. La mise en oeuvre d'une composition adhésive se présentant sous une telle forme induit l'obligation de peser très précisément la partie contenant le réticulant.

Dans les formes bicomposantes on dispose d'une part d'un prémélange déjà catalysé et d'autre part d'un prépolymère obtenu par la réaction du réticulant sur l'oligomère. Il est alors possible de mettre en oeuvre la composition adhésive en mélangeant environ 50% du prépolymère et 50% du prémélange et de supprimer l'étape du pesage très précis nécessaire pour la composition "one-shot". Les avantages de la formulation "bicomposante", outre celui mentionné ci-dessus, sont nombreux. Par exemple, leur mise en oeuvre étant rapide, elle nécessite une vie de pot moins importante que dans le cas de composition "one shot".

La présente invention concerne également les préparations bicomposantes et "one shot" permettant d'obtenir les compositions adhésives précédemment décrites.
Sous sa forme "one shot" l'une des deux parties contient la totalité du polybutadiène hydroxytéléchélique et l'autre partie contient pour 100 parties en poids d'isophorone diisocyanate, 20 à 50 parties de tolylène diisocyanate, et en tant que catalyseur soit 0,1 à 3 parties en poids d'une amine tertiaire, soit 0,01 à 0,3 partie en poids d'un sel organique de plomb ou d'étain.

Sous sa forme bicomposante l'une des deux parties comprend pour 100 parties en poids de polybutadiène hydroxytéléchélique, 10 à 25 parties en poids de tolylène diisocyanate, 30 à 50 parties en poids d'isophorone diisocyanate et la seconde partie comprend pour 100 parties en poids de polybutadiène hydroxytéléchélique, en tant que catalyseur soit 0,1 à 3 parties en poids d'une amie tertiaire, soit 0,01 à 0,3 partie en poids d'un sel organique de plomb ou d'étain.

Préférentiellement la composition sera préparée à partir d'une préparation bicomposante dans laquelle l'une des deux parties comprend pour 100 parties en poids de polybutadiène hydroxytéléchélique, 12 à 20 parties en poids de tolylène diisocyanate, 35 à 45 parties en poids d'isophorone diisocyanate et la seconde partie comprend pour 100 parties en poids de polybutadiène hydroxytéléchélique, en tant que catalyseur soit 0,2 à 2 parties en poids d'une amine tertiaire, soit 0,02 à 0,2 partie en poids d'un sel organique de plomb ou d'étain.

## Revendications

1. Composition adhésive thermoplastique réticulable à base de polybutadiène hydroxytéléchélique, d'un mélange de composés diisocyanates et d'un catalyseur, caractérisée en ce que :
- d'une part elle contient, pour 100 parties en poids de polybutadiène hydroxytéléchélique, une quantité de tolylène diisocyanate et une quantité d'isophorone diisocyanate telles que le rapport entre le nombre total de fonction isocyanates de la composition et le nombre total de fonctions hydroxyles de la composition soit compris entre 0,90 et 1,30,
- en ce que d'autre part le rapport entre le nombre des fonctions isocyanates apportées par le tolylène diisocyanate et le nombre de fonctions isocyanates apportées par l'isophorone diisocyanate est compris entre 0,1 et 2,
- et en ce que le catalyseur utilisé est choisi dans le groupe constitué par les amines tertiaires et les sels organiques de plomb ou d'étain et entre dans la composition du mélange à raison de 0,1 à 1% en poids dans le cas d'une amine tertiaire et à raison de 0,01 à 0,1% en poids dans le cas d'un sel métallique.

2. Composition adhésive thermoplastique réticulable selon la revendication 1 caractérisée en ce que :
- d'une part elle contient, pour 100 parties en poids de polybutadiène hydroxytéléchélique, une quantité de tolylène diisocyanate et une quantité d'isophorone diisocyanate telles que le rapport entre le nombre total de fonctions isocyanates de la composition et le nombre total de fonctions hydroxyles de la composition soit compris entre 1,05 et 1,15,
- en ce que d'autre part le rapport entre le nombre des fonctions isocyanates apportées par le tolylène diisocyanate et le nombre de fonctions isocyanates apportées par l'isophorone diisocyanate est compris entre 0,3 et 0,8.
- et en ce que le catalyseur utilisé est choisi dans le groupe constitué par les amines tertiaires et les sels organiques de plomb ou d'étain et entre dans la composition du mélange à raison de 0,1 à 0,4% en poids dans le cas d'une amine tertiaire et à raison de 0,01 à 0,03% en poids dans le cas d'un sel métallique.

3. Composition adhésive thermoplastique réticulable selon l'une quelconque des revendications précédentes caractérisée en ce que le catalyseur est la triéthylamine.

4. Composition adhésive thermoplastique réticulable selon la revendication 1 ou la revendication 2 caractérisée en ce que le catalyseur est l'octoate de plomb.

5. Composition adhésive thermoplastique réticulable selon la revendication 3 caractérisée en ce que pour 100 parties de polybutadiène hydroxytéléchélique elle comprend 6 à 10 parties de tolylène diisocyanate, 18 à 22 parties d'isophorone diisocyanate, et 0,2 à 0,3 partie de triéthylamine.

6. Composition adhésive thermoplastique réticulable selon la revendication 4 caractérisée en ce que pour 100 parties de polybutadiène hydroxytéléchélique elle comprend 6 à 10 parties de tolylène diisocyanate, 18 à 22 parties d'isophorone diisocyanate, et 0,01 à 0,02 partie d'octoate de plomb.

7. Composition adhésive thermoplastique réticulable selon les revendications 5 et 6 caractérisée en ce qu'elle comprend en outre de 5 à 10 parties de noir de carbone, 3 à 10 parties de silice, entre 3 et 4 parties d'époxyde de glycérol, entre 7 et 10 parties de trimétylhexanediol 0,3 à 0,7 partie de ditertiobutylparacrésol et 0,1 à 0,03 partie de chlorure de benzoyle.

8. Préparation adhésive "one shot" constituée de deux parties et permettant d'obtenir une composition adhésive conforme à l'une quelconque des revendications précédentes caractérisée en ce que l'une des deux parties contient la totalité du polybutadiène hydroxytéléchélique et en ce que l'autre partie contient pour 100 parties en poids d'isophorone diisocyanate, 20 à 50 parties en poids de tolylène diisocyanate, et en tant que catalyseur soit 0,1 à 3 parties en poids d'une amine tertiaire, soit 0,01 à 0,3 partie en poids d'un sel organique de plomb ou d'étain.

9. Préparation adhésive bicomposante constituée de deux parties et permettant d'obtenir une composition adhésive conforme à l'une quelconque des revendications précédentes caractérisée en ce que l'une des deux parties comprend 100 parties en poids de polybutadiène hydroxytéléchélique, 10 à 25 parties en poids de tolylène diisocyanate, 30 à 50 parties en poids d'isophorone diisocyanate et la seconde partie comprend 100 parties en poids de polybutadiène hydroxytéléchélique et en tant que catalyseur soit 0,1 à 3 parties en poids d'une amine tertiaire, soit 0,01 à 0,3 partie en poids d'un sel organique de plomb ou d'étain.

10. Préparation adhésive bicomposante selon la revendication 9 caractérisée en ce que l'une des deux parties comprend 100 parties en poids de polybutadiène hyroxytéléchélique, 12 à 20 parties en poids de tolylène diisocyanate, 35 à 45 parties en poids d'isophorone diisocyanate et la seconde partie comprend 100 parties en poids de polybutadiène hydroxytéléchélique et en tant que catalyseur soit 0,2 à 2 parties en poids d'une amine tertiaire, soit 0,02 à 0,2 partie en poids d'un sel organique de plomb ou d'étain.

## Claims

1. Cross-linkable thermoplastic adhesive composition based on hydroxytelechelic polybutadiene, a mixture of diisocyanate compounds and a catalyst, characterised in that:
- on the one hand, it contains, per 100 parts by weight of hydroxytelechelic polybutadiene, an amount of tolylene diisocyanate and an amount of isophorone diisocyanate such that the ratio of the total number of isocyanate functional groups in the composition to the total number of hydroxyl functional groups in the composition is between 0.90 and 1.30,
- in that, on the other hand, the ratio of the number of isocyanate functional groups introduced by tolylene diisocyanate to the number of isocyanate functional groups introduced by isophorone diisocyanate is between 0.1 and 2,
- and in that the catalyst used is chosen from the group consisting of tertiary amines and lead or tin organic salts and forms part of the composition of the mixture at a concentration of 0.1 to 1% by weight in the case of a tertiary amine and at a concentration of 0.01 to 0.1% by weight in the case of a metal salt.

2. Cross-linkable thermoplastic adhesive composition according to Claim 1, characterised in that:
- on the one hand, it contains, per 100 parts by weight of hydroxytelechelic polybutadiene, an amount of tolylene diisocyanate and an amount of isophorone diisocyanate such that the ratio of the total number of isocyanate functional groups in the composition to the total number of hydroxyl functional groups in the composition is between 1.05 and 1.15,
- in that, on the other hand, the ratio of the number of isocyanate functional groups introduced by tolylene diisocyanate to the number of isocyanate functional groups introduced by isophorone diisocyanate is between 0.3 and 0.8,
- and in that the catalyst used is chosen from the group consisting of tertiary amines and lead or tin organic salts and forms part of the composition of the mixture at a concentration of 0.1 to 0.4% by weight in the case of a tertiary amine and at a concentration of 0.01 to 0.03% by weight in the case of a metal salt.

3. Cross-linkable thermoplastic adhesive composition according to any one of the preceding claims, characterised in that the catalyst is triethylamine.

4. Cross-linkable thermoplastic adhesive composition according to Claim 1 or Claim 2, characterised in that the catalyst is lead octoate.

5. Cross-linkable thermoplastic adhesive composition according to Claim 3, characterised in that, per 100 parts of hydroxytelechelic polybutadiene, it comprises 6 to 10 parts of tolylene diisocyanate, 18 to 22 parts of isophorone diisocyanate and 0.2 to 0.3 part of triethylamine.

6. Cross-linkable thermoplastic adhesive composition according to Claim 4, characterised in that, per 100 parts of hydroxytelechelic polybutadiene, it comprises 6 to 10 parts of tolylene diisocyanate, 18 to 22 parts of isophorone diisocyanate and 0.01 to 0.02 part of lead octoate.

7. Cross-linkable thermoplastic adhesive composition according to Claims 5 and 6, characterised in that it additionally comprises from 5 to 10 parts of carbon black, 3 to 10 parts of silica, between 3 and 4 parts of glycerol epoxide, between 7 and 10 parts of trimethylhexanediol, 0.3 to 0.7 part of di(tert-butyl)-para-cresol and 0.1 to 0.03 part of benzoyl chloride.

8. "One shot" adhesive preparation consisting of two parts and making it possible to produce an adhesive composition in accordance with any one of the preceding claims, characterised in that one of the two parts contains all the hydroxytelechelic polybutadiene and in that the other part contains, per 100 parts by weight of isophorone diisocyanate, 20 to 50 parts by weight of tolylene diisocyanate and, as catalyst, either 0.1 to 3 parts by weight of a tertiary amine or 0.01 to 0.3 part by weight of a lead or tin organic salt.

9. Two-component adhesive preparation consisting of two parts and making it possible to produce an adhesive composition in accordance with any one of the preceding claims, characterised in that one of the two parts comprises 100 parts by weight of hydroxytelechelic polybutadiene, 10 to 25 parts by weight of tolylene diisocyanate and 30 to 50 parts by weight of isophorone diisocyanate and the second part comprises 100 parts by weight of hydroxytelechelic polybutadiene and, as catalyst, either 0.1 to 3 parts by weight of a tertiary amine or 0.01 to 0.3 part by weight of a lead or tin organic salt.

10. Two-component adhesive preparation according to Claim 9, characterised in that one of the two parts comprises 100 parts by weight of hydroxytelechelic polybutadiene, 12 to 20 parts by weight of tolylene diisocyanate and 35 to 45 parts by weight of isophorone diisocyanate and the second part comprises 100 parts by weight of hydroxytelechelic polybutadiene and, as catalyst, either 0.2 to 2 parts by weight of a tertiary amine or 0.02 to 0.2 part by weight of a lead or tin organic salt.

## Patentansprüche

1. Vernetzbare thermoplastische Klebstoffzusammensetzung auf der Basis von hydroxytelechelem Polybutadien, einer Mischung von Diisocyanatverbindungen und eines Katalysators, dadurch gekennzeichnet, daß
- daß sie einerseits pro 100 Gewichtsteile des hydroxytelechelen Polybutadiens eine solche Menge an Toluylendiisocyanat und eine solche Menge an Isophorondiisocyanat enthält, daß das Verhältnis zwischen der Gesamtzahl der Isocyanatfunktionen der Zusammensetzung und der Gesamtzahl der Hydroxylfunktionen der Zusammensetzung im Bereich von 0,90 bis 1,30 liegt,
- daß andererseits das Verhaltnis zwischen der Anzahl der durch das Toluylendiisocyanat eingebrachten Isocyanatfunktionen und der Anzahl der durch das Isophorondiisocyanat eingebrachten Isocyanatfunktionen im Bereich von 0,1 bis 2 liegt.
- und daß der verwendete Katalysator aus der Gruppe der tertiären Amine und der organischen Salze von Blei oder Zinn ausgewählt ist und in die Mischzusammensetzung im Verhältnis von 0,1 bis 1 Gew.-% im Fall eines tertiären Amins und im Verhältnis von 0,01 bis 0,1 Gew.-% im Fall eines Metallsalzes gelangt.

2. Vernetzbare thermoplastische Klebstoffzusammensetzung nach Anspruch 1, dadurch gekennzeichnet,
- daß sie einerseits pro 100 Gewichtsteile des hydroxytelechelen Polybutadiens eine solche Menge an Toluylendiisocyanat und eine solche Menge an Isophorondiisocyanat enthält, daß das Verhältnis der Gesamtzahl der Isocyanatfunktionen der Zusammensetzung und der Gesamtzahl der Hydroxylfunktionen der Zusammensetzung im Bereich von 1,05 bis 1,15 liegt,
- daß andererseits das Verhältnis der Anzahl der durch das Toluylendiisocyanat eingebrachten Isocyanatfunktionen und der Anzahl der durch das Isophorondiisocyanat eingebrachten Isocyanatfunktionen im Bereich von 0,3 bis 0,8 liegt
- und daß der verwendete Katalysator aus der Gruppe der tertiären Amine und der organischen Salze von Blei und Zinn ausgewählt ist und in die Mischzusammensetzung im Verhältnis von 0,1 bis 0,4 Gew.-% im Fall eines tertiären Amins und im Verhältnis von 0,01 bis 0,03 Gew.-% im Fall eines Metallsalzes gelangt.

3. Vernetzbare thermoplastische Klebstoffzusammensetzung nach einem der vorstehenden Ansprüche, dadurch gekennzeichnet, daß es sich beim Katalysator um Triethylamin handelt.

4. Vernetzbare thermoplastische Klebstoffzusammensetzung nach Anspruch 1 oder 2, dadurch gekennzeichnet, daß es sich beim Katalysator um Bleioctoat handelt.

5. Vernetzbare thermoplastische Klebstoffzusammensetzung nach Anspruch 3, daß sie pro 100 Teile hydroxytelechelem Polybutadien 6 bis 10 Teile Toluylendiisocyanat, 18 bis 22 Teile Isophorondiisocyanat und 0,2 bis 0,3 Teile Triethylamin enthält.

6. Vernetzbare thermoplastische Klebstoffzusammensetzung nach Anspruch 4, dadurch gekennzeichnet, daß sie pro 100 Teile hydroxytelechelem Polybutadien 6 bis 10 Teile Toluylendiisocyanat, 18 bis 22 Teile Isophorondiisocyanat und 0,01 bis 0,02 Teile Bleioctoat enthält.

7. Vernetzbare thermoplastische Klebstoffzusammensetzung nach den Ansprüchen 5 und 6, dadurch gekennzeichnet, daß sie ferner 5 bis 10 Teile Ruß, 3 bis 10 Teile Siliciumdioxid, 3 bis 4 Teile Glycerinepoxid, 7 bis 10 Teile Trimethylhexandiol, 0,3 bis 0,7 Teile Di-tert.-butyl-p-cresol und 0,1 bis 0,03 Teile Benzoylchlorid enthält.

8. "One shot"-Klebstoffpräparat, das aus zwei Bestandteilen besteht und die Bildung einer Klebstoffzusammensetzung nach einem der vorstehenden Ansprüche ermöglicht, dadurch gekennzeichnet, daß einer der beiden Bestandteile die Gesamtmenge des hydroxytelechelen Polybutadiens enthält und der anderere Bestandteil pro 100 Gewichtsteile Isophorondiisocyanat 20 bis 50 Gewichtsteile Toluylendiisocyanat und als Katalysator entweder 0,1 bis 3 Gewichtsteile eines tertiären Amins oder 0,01 bis 0,3 Gewichtsteile eines organischen Salzes von Blei oder Zinn enthält.

9. Zweikomponentiges Klebstoffpräparat, das aus zwei Bestandteilen besteht und die Bildung einer Klebstoffzusammensetzung nach einem der vorstehenden Ansprüche ermöglicht, dadurch gekennzeichnet, daß einer der beiden Bestandteile 100 Gewichtsteile hydroxytelecheles Polybutadien, 10 bis 25 Gewichtsteile Toluylendiisocyanat und 30 bis 50 Gewichtsteile Isophorondiisocyanat enthält und der zweite Bestandteil 100 Gewichtsteile hydroxytelecheles Polybutadien und als Katalysator entweder 0,1 bis 3 Gewichtsteile eines tertiären Amins oder 0,01 bis 0,3 Gewichtsteile eines organischen Salzes von Blei oder Zinn enthält.

10. Zweikomponentiges Klebstoffpräparat nach Anspruch 9, dadurch gekennzeichnet, daß einer der beiden Bestandteile 100 Gewichtsteile hydroxytelecheles Polybutadien, 12 bis 20 Gewichtsteile Toluylendiisocyanat und 35 bis 45 Gewichtsteile Isophorondiisocyanat enthält und der zweite Bestandteil 100 Gewichtsteile hydroxytelecheles Polybutadien und als Katalysator entweder 0,2 bis 2 Gewichtsteile eines tertiären Amins oder 0,02 bis 0,2 Gewichtsteile eines organischen Salzes von Blei oder Zinn enthält.
